# EUROPÄISCHE PATENTSCHRIFT

(11) **EP 4 164 930 B1**
(45) Veröffentlichungstag und Bekanntmachung des Hinweises auf die Patenterteilung: **26.03.2025**
(21) Anmeldenummer: 21769383.7
(22) Anmeldetag: 24.08.2021
(51) Int. Cl.: B60T 11/32, B60T 13/26, B60T 13/36, B60T 17/04, B60T 17/22, B60T 15/60, B61G 5/08

(54) **DRUCKLUFTVERSORGUNGSANORDNUNG FÜR EINE ZUGZUSAMMENSTELLUNG**
COMPRESSED-AIR SUPPLY ARRANGEMENT FOR A TRAIN ASSEMBLY
ARRANGEMENT D'ALIMENTATION EN AIR COMPRIMÉ POUR ENSEMBLE DE TRAIN

(30) Priorität: 26.08.2020 AT 507142020
(43) Veröffentlichungstag der Anmeldung: 19.04.2023
(73) Patentinhaber: Siemens Mobility Austria GmbH, 1210 Wien (AT)
(72) Erfinder: SCHNEIDER, Harald, 1100 Wien (AT)
(74) Vertreter: Siemens Patent Attorneys
(86) Internationale Anmeldenummer: PCT/EP2021/073392
(87) Internationale Veröffentlichungsnummer: WO 2022/043326

(56) Entgegenhaltungen:
- EP-A2- 0 950 594
- WO-A1-2017/167592
- DE-A1- 102015 116 193
- JP-A- 2012 245 949

## Beschreibung

### Technisches Gebiet

Die Erfindung betrifft eine Druckluftversorgungsanordnung für eine Zugzusammenstellung.

### Stand der Technik

In Schienenfahrzeugen können unterschiedliche Systeme mit Druckluft betrieben werden. Der häufigste Einsatzzweck von Druckluft ist die Bremsanlagen, welche auch bei modernen Fahrzeugen immer noch meist mit druckluftbetätigten Aktoren ausgestattet sind. Andere Systeme, wie Türantriebe, Pantografen- oder Stromschienenabnehmerantriebe, automatische Kupplungen, Kupplungsabdeckungen, etc. werden immer mehr durch elektrische Antriebe ersetzt, da diese im Allgemeinen kleiner, leichter und einfacher anzusteuern sind. Jedoch stellt die Druckluftversorgung immer noch eine wesentliche und sicherheitsrelevante Baugruppe von Schienenfahrzeugen dar. Bei lokbespannten Zügen erfolgt die Druckluftversorgung in der Lokomotive und wird mittels einer sogenannten Hauptluftleitung, bzw. Hauptbehälterleitung oder Hauptbremsleitung über die gesamte Länge des Zuges geführt. Diese Leitung ist in den einzelnen Wagen als fest verlegte Leitung aus Stahlrohren aufgebaut, wobei die Leitungen der Wagen untereinander, bzw. zur Lokomotive als flexible Leitungen ausgeführt sind. Als flexible Leitungen werden dabei qualitativ hochwertige Schläuche eingesetzt, sodass ein Versagen innerhalb der Wartungsintervalle unwahrscheinlich, aber naturgemäß nicht ausgeschlossen ist. Versagt eine solche flexible Leitung, so ist die Bremsanlage des gesamten Zuges außer Funktion. Bei Triebzügen oder auch U-Bahnen sind häufig mehr als ein Druckluftkompressor vorgesehen und auch über die Zuglänge in unterschiedlichen Wagen verteilt. Solcherart kann ein Ausfall eines Kompressors kompensiert werden und der Fahrbetrieb fürs Erste fortgesetzt werden, was insbesondere bei Nahverkehrsstrecken mit dichtem Fahrplan wesentlich ist. Versagt jedoch bei solchen, mit mehreren Kompressoren ausgestatteten Zügen eine flexible Leitung zwischen einzelnen Wagen, so ist ebenfalls die gesamte Bremsanlage außer Funktion. Es ist möglich, eine redundante Schlauchleitung vorzusehen, sodass im Fall einer Beschädigung auf die zweite Leitung umgeschaltet werden kann. Eine solche redundante Schlauchleitung wird zum Beispiel im Dokument WO 2017/167592 A1 beschrieben. Diese Lösung ist allerdings aufwendig und mit großem Platzbedarf verbunden.

### Darstellung der Erfindung

Der Erfindung liegt daher die Aufgabe zugrunde, eine Druckluftversorgungsanordnung für eine Zugzusammenstellung anzugeben, bei welcher ein Versagen der flexiblen Druckluftleitungen zwischen einzelnen Wagen zu keinem Totalausfall der Zugzusammenstellung führt.

Die Aufgabe wird durch eine Druckluftversorgungsanordnung mit den Merkmalen des Anspruchs 1 gelöst. Vorteilhafte Ausgestaltungen sind Gegenstand untergeordneter Ansprüche.

Dem Grundgedanken der Erfindung nach wird eine Druckluftversorgungsanordnung für eine Zugzusammenstellung aus einer Mehrzahl von miteinander gekuppelten Schienenfahrzeugwagen beschrieben, wobei mindestens zwei Druckluftquellen vorgesehen sind, welche eine die gesamte Zugzusammenstellung durchlaufende Druckluftleitung speisen, wobei in Schienenfahrzeugwagen mit Druckluftverbrauchern wagenseitig vor den Kuppelstellen der Druckluftleitung zu flexiblen, die Schienenfahrzeugwagen verbindenden Leitungsabschnitten, jeweils ein in Richtung der zugehörigen Kuppelstelle sperrendes Strömungsbegrenzungsventil mit einer jeweils parallel angeordneten Drossel vorgesehen ist.

Ein Strömungsbegrenzungsventil erlaubt den Fluss der Druckluft in beide Richtungen, jedoch sperrt das Ventil bei Überschreitung des Volumensflußes in eine der beiden Richtungen.

Dadurch ist der Vorteil erzielbar, auch bei einem Versagen einer flexiblen Druckluftleitungen zwischen zwei Wagen alle Druckluftverbraucher weiterhin mit Druckluft versorgen zu können. In einem Fehlerfall, d.h. einem Versagen einer flexiblen Druckluftleitung, erfolgt kein unkontrolliertes Ausströmen der die gesamte Zugzusammenstellung durchlaufenden Druckluftleitung. Dabei sperren die an den Kupplungsstellen zu dem betroffenen flexiblen Leitungsabschnitt angeordneten Strömungsbegrenzungsventile und verhindern den unkontrollierten Austritt von Druckluft. Die den Strömungsbegrenzungsventilen parallel geschalteten Drosseln lassen jedoch Druckluft ins Freie strömen, jedoch ist der Druckluftverlust so gering, dass die Druckluftquellen ihn ohne weiteres kompensieren können.

Bei einem Bruch, bzw. sonstigen Versagen eines flexiblen Leitungsabschnitts ist erfindungsgemäß die Zugzusammenstellung in zwei Abschnitte geteilt, welche von jeweils einer Druckluftquelle gespeist werden. Beide Druckluftquellen speisen dabei auch den Verlust von Druckluft an der Fehlerstelle über jeweils eine Drossel.

Es ist besonders vorteilhaft die mindestens zwei Druckluftquellen in den Endwagen der Zugzusammenstellung anzuordnen, sodass bei einem Fehler in einem beliebigen flexiblen Abschnitt der, die Zugzusammenstellung durchlaufenden Druckluftleitung die Druckluftverbraucher weiterhin versorgt werden. Sind die Druckluftquellen nicht in den Endwagen angeordnet, so würden Fehler in flexiblen Abschnitten zwischen den mit Druckluftquellen ausgestatteten Wagen und den Endwagen nicht kompensiert werden.

Bei längeren Zugzusammenstellungen ist es vorteilhaft, neben den Druckluftquellen in den Endwagen noch weitere Druckluftquellen in Mittelwagen vorzusehen, sodass die Weglängen zu einer Fehlerstelle kürzer sind und die Kompensation des Druckluftverlustes schneller erfolgt.

Da die Druckluft bei modernen Fahrzeugen hauptsächlich nur für die Bremsbetätigung und ggf. für die Luftfederung benötigt wird, ist meist nur eine Druckluftquelle in einer Zugzusammenstellung im Fahrbetrieb kontinuierlich eingeschaltet. Die weitere, bzw. weiteren Druckluftquellen werden vorteilhafterweise erst bei einem Abfall des Luftdrucks in der Druckluftleitung unter einen bestimmten Minimaldruck zugeschaltet. Solcherart kann der Energieverbrauch der Druckluftversorgung gesenkt werden. In bestimmten Betriebszuständen, beispielsweise beim Füllen der gesamten Druckluftanlage oder in einem Fehlerfall in einem flexiblen Abschnitt der Druckluftleitung, werden die weiteren Druckluftquellen zugeschaltet. Dies erfolgt vorteilhafterweise mittels Druckschaltern an der Druckluftleitung in unmittelbarer Nähe der zugeordneten Druckluftquelle oder mittels Drucksensoren und einem zugehörigen Steuergerät.

Bestimmte Zugzusammenstellungen sehen Mittelwagen vor, welche keine Druckluftverbraucher aufweisen. Beispielsweise werden bei U-Bahnen oft sogenannte Sänftenwagen eingesetzt, welche kein Fahrwerk umfassen und die von den benachbarten Wagen getragen werden. Durch die Absenz eines Fahrwerks entfällt auch die Notwendigkeit einer druckluftbetätigten Bremse, sodass der Sänftenwagen keine Druckluftverbraucher aufweist. Weitere typische Druckluftverbraucher, wie Antriebe von Stromabnehmer entfallen demgemäß auch und Türantriebe sind bei modernen Fahrzeugen praktisch ausnahmslos mit elektrischen Antrieben ausgestattet. In einem solchen Mittelwagen ohne Druckluftverbraucher können somit vorteilhafterweise die Strömungsbegrenzungsventile und die den Strömungsbegrenzungsventilen parallelgeschalteten Drosseln entfallen. Tritt nun ein Fehler an einem flexiblen Abschnitt einer Druckluftleitung an einer Kuppelstelle zwischen einem Wagen mit Druckluftverbrauchern und einem Wagen ohne Druckluftverbrauchern auf, so wird dabei die gesamte Druckluftleitung in dem Wagen ohne Druckluftverbrauchern entlüftet, was Mangels Druckluftverbrauchern folgenlos bleibt. Solcherart können Wagen ohne Druckluftverbraucher einfacher und kostengünstiger hergestellt werden, da keine für einen Weiterbetrieb der Zugzusammenstellung in einem Fehlerfall nicht erforderlichen Komponenten eingebaut werden.

### Kurzbeschreibung der Zeichnungen

Es zeigen beispielhaft:
**Fig.1** Zugzusammenstellung.
**Fig.2** Mittelwagen.
**Fig.3** Endwagen.
**Fig.4** Zugzusammenstellung mit Mittelwagen ohne Druckluftverbraucher.

### Ausführung der Erfindung

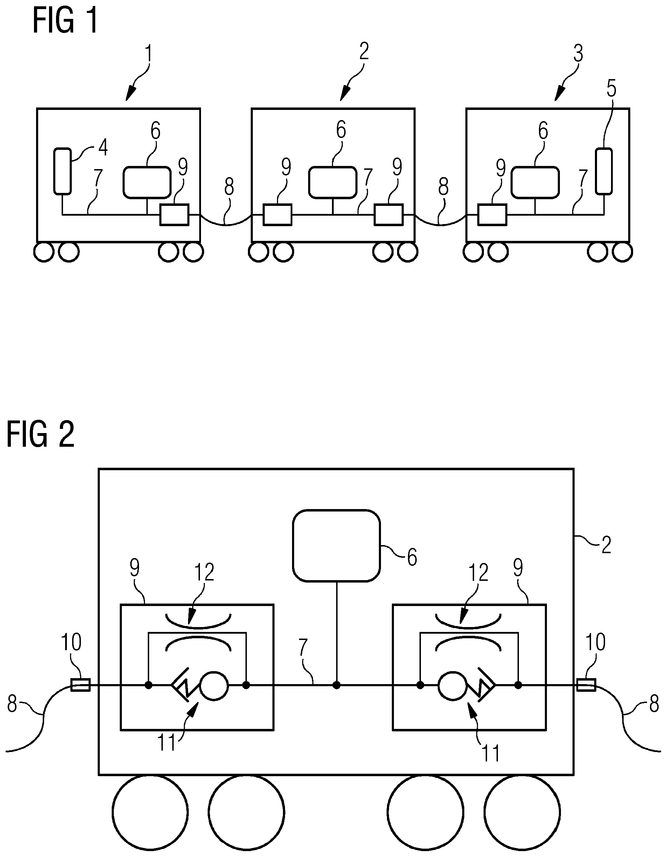

**Fig.1** zeigt beispielhaft und schematisch ein vereinfachtes pneumatisches Schaltbild einer Zugzusammenstellung. Es ist eine Zugzusammenstellung aus zwei Endwagen 1, 3 und einem Mittelwagen 2 dargestellt, bei welchen eine Druckluftleitung 7 alle Schienenfahrzeugwagen durchläuft. An den Verbindungsstellen zwischen den Wagen sind jeweils flexible Abschnitte 8 angeordnet. Jeder der Schienenfahrzeugwagen 1, 2, 3 weist Druckluftverbraucher 6 auf, beispielsweise eine druckluftbetätigte Bremsanlage. In den Endwagen 1, 3 ist jeweils eine Druckluftquelle 4, 5 vorgesehen, welche Druckluft in die Druckluftleitung 7 einspeist. An allen Verbindungsstellen der Druckluftleitung 7 zu einem flexiblen Abschnitt 8 der Druckluftleitung 7 ist eine Schlauchbruchsicherung 9 angeordnet, welche ein in Richtung der zugehörigen Verbindungsstellen sperrendes Strömungsbegrenzungsventil mit einer jeweils parallel angeordneten Drossel vorgesehen umfasst. Der Aufbau der Schlauchbruchsicherung 9 ist in den folgenden Figuren detailliert gezeigt.

**Fig.2** zeigt beispielhaft und schematisch ein vereinfachtes pneumatisches Schaltbild eines Mittelwagens. Es ist ein Mittelwagen 2 aus Fig.1 dargestellt, welcher einen Druckluftverbraucher 6 umfasst, der aus der Druckluftleitung 7 mit Druckluft versorgt wird. An den Wagenenden ist jeweils eine Kuppelstelle 10 der Druckluftleitung 7 angeordnet, an welcher flexible Leitungsabschnitte 8 zur Verbindung mit weiteren Wagen angeschlossen sind. Der Mittelwagen 2 ist mit zwei Schlauchbruchsicherungen 9 in der Druckluftleitung 7 ausgestattet, welche jeweils am stirnseitigen Ende der Druckluftleitung 7 angeordnet sind. Die Schlauchbruchsicherungen 9 umfassen jeweils ein in Richtung der zugehörigen Kuppelstelle 10 sperrendes Strömungsbegrenzungsventil 11 mit einer jeweils parallel angeordneten Drossel 12. Versagt beispielsweise die in Fig.2 links dargestellte flexible Leitung 8, so sperrte das zugehörige (linke) Strömungsbegrenzungsventil 11 aufgrund des Druckabfalls an der (linken) Kuppelstelle 10. Über die (linke) Drossel 12 kann Druckluft in das Freie entweichen, jedoch ist dieser Volumenstrom so gering, dass er aus der Druckluftquelle leicht ersetzt werden kann. Der Druckluftverbraucher 6 des Mittelwagens 2 wird folgedessen weiterhin versorgt.

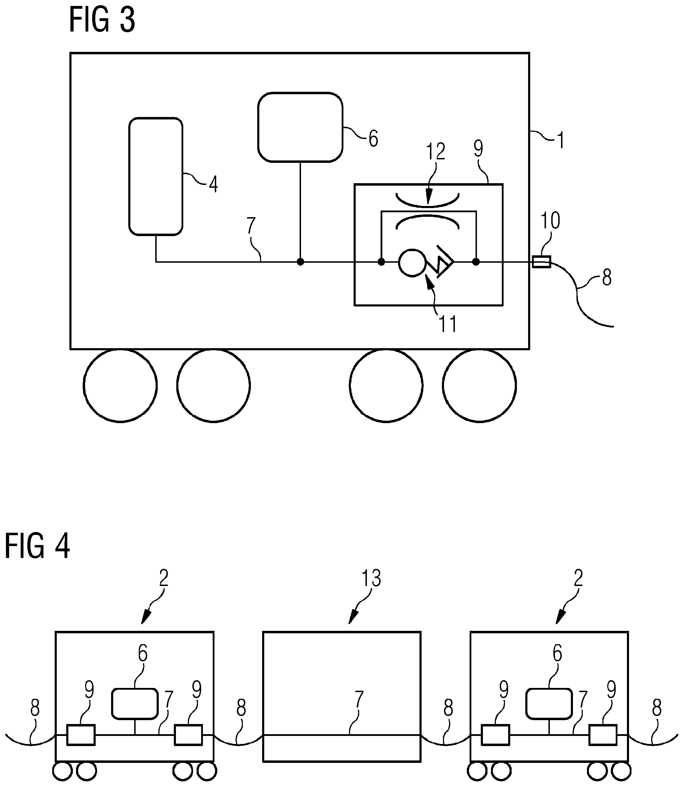

**Fig.3** zeigt beispielhaft und schematisch ein vereinfachtes pneumatisches Schaltbild eines Endwagens. Es ist ein Endwagen 1 aus Fig.1 dargestellt, welcher einen Druckluftverbraucher 6 umfasst, der aus der Druckluftleitung 7 mit Druckluft versorgt wird. Die Druckluftleitung 7 wird dabei aus einer ersten Druckluftquelle 4 gespeist, welche auch in dem Endwagen angeordnet ist. Des Weiteren umfasst der Endwagen 1 eine Schlauchbruchsicherung 9, welche wie jene des in Fig.2 gezeigten Mittelwagens 2 aufgebaut ist. Ein in Richtung der zugehörigen Kuppelstelle 10 sperrendes Strömungsbegrenzungsventil 11 ist parallel zu einer Drossel 12 im Verlauf der Druckluftleitung 7 angeordnet.

**Fig.4** zeigt beispielhaft und schematisch ein vereinfachtes pneumatisches Schaltbild einer Zugzusammenstellung mit Mittelwagen ohne Druckluftverbraucher. Es ist ein Mittelwagen 13 ohne Druckluftverbraucher dargestellt, wie er beispielsweise als fahrwerksloser Sänftenwagen ausgeführt sein kann. Der fahrwerkslose Mittelwagen 13 wird dabei von den benachbarten Mittelwagen 2 getragen. Fehlen Druckluftverbraucher, so ist eine einfache Durchführung der Druckluftleitung 7 ausreichend und auch Schlauchbruchsicherungen können entfallen. Bei einem Fehler an einer der beiden flexiblen Leitungsabschnitte 8 oder der Druckluftleitung 7 in dem Mittelwagen 13 übernehmen die Schlauchbruchsicherungen 9 der benachbarten Mittelwagen 2 die Schutzfunktion. Es ist auch möglich, untergeordnete Druckluftverbraucher, deren Ausfall keine Auswirkungen auf den Fahrbetrieb aufweist in dem Mittelwagen 13 vorzusehen.

### Liste der Bezeichnungen

- 1: Erster Endwagen
- 2: Mittelwagen
- 3: Zweiter Endwagen
- 4: Erste Druckluftquelle
- 5: Zweite Druckluftquelle
- 6: Druckluftverbraucher
- 7: Druckluftleitung
- 8: Flexibler Leitungsabschnitt
- 9: Schlauchbruchsicherung
- 10: Kuppelstelle
- 11: Strömungsbegrenzungsventil
- 12: Drossel
- 13: Mittelwagen ohne Druckluftverbraucher

## Patentansprüche

1. Druckluftversorgungsanordnung für eine Zugzusammenstellung aus einer Mehrzahl von miteinander gekuppelten Schienenfahrzeugwagen (1, 2, 3), darunter mehrere mit Druckluftverbrauchern (6),
umfassend mindestens zwei Druckluftquellen (4, 5) und eine Druckluftleitung (7) geeignet um die gesamte Zugzusammenstellung zu durchlaufen, wobei die Druckluftleitung (7) mit flexiblen Leitungsabschnitten (8) zur Verbindung der Schienenfahrzeugwagen (1, 2, 3) versehen ist und mit diesen flexiblen Leitungsabschnitten (8) über Kuppelstellen (10) verbunden ist,
wobei die mindestens zwei Druckluftquellen (4, 5) die Druckluftleitung (7) speisen,
**dadurch gekennzeichnet, dass**
in den für Schienenfahrzeugwagen mit Druckluftverbrauchern (6) vorgesehenen Druckluftleitungen (7) wagenseitig vor den Kuppelstellen (10) der Druckluftleitung (7) zu flexiblen, die Schienenfahrzeugwagen (1, 2, 3) verbindenden Leitungsabschnitten (8), jeweils ein in Richtung der zugehörigen Kuppelstelle (10) sperrendes Strömungsbegrenzungsventil (11) mit einer jeweils parallel angeordneten Drossel (12) vorgesehen ist.

2. Druckluftversorgungsanordnung für eine Zugzusammenstellung nach Anspruch 1,
**dadurch gekennzeichnet, dass**
die mindestens zwei Druckluftquellen (4, 5) dazu vorgesehen sind, jeweils in einem Endwagen (1, 3) der Zugzusammenstellung angeordnet zu sein.

3. Druckluftversorgungsanordnung für eine Zugzusammenstellung nach Anspruch 1 oder 2,
**dadurch gekennzeichnet, dass** eine der Druckluftquellen (4, 5) im Fahrbetrieb kontinuierlich eingeschaltet ist und die andere Druckluftquelle bei Abfall des Luftdrucks in der Druckluftleitung (7) unter einen bestimmten Minimaldruck zugeschaltet wird.

## Claims

1. Compressed-air supply arrangement for a train assembly composed of a plurality of rail vehicle cars (1, 2, 3) coupled to one another, including several with compressed-air consumers (6), comprising at least two compressed-air sources (4, 5) and a compressed-air line (7) suitable for running through the entire train assembly, wherein the compressed-air line (7) is provided with flexible line sections (8) for connecting the rail vehicle cars (1, 2, 3) and is connected to these flexible line sections (8) via coupling points (10), wherein the at least two compressed-air sources (4, 5) feed the compressed-air line (7), **characterized in that**
in the compressed-air lines (7) provided for rail vehicle cars having compressed-air consumers (6) in each case, a flow limiting valve (11) blocking in the direction of the associated coupling point (10) and having a restrictor (12) respectively arranged in parallel is provided on the car before the coupling points (10) of the compressed-air line (7) to flexible line sections (8) connecting the rail vehicle cars (1, 2, 3).

2. Compressed-air supply arrangement for a train assembly according to Claim 1,
**characterized in that**
the at least two compressed-air sources (4, 5) are each intended to be arranged in an end car (1, 3) of the train assembly.

3. Compressed-air supply arrangement for a train assembly according to Claim 1 or 2,
**characterized in that** one of the compressed-air sources (4, 5) is switched on continuously during driving operation, and the other compressed-air source is switched on if the air pressure in the compressed-air line (7) drops below a specific minimum pressure.

## Revendications

1. Agencement d'approvisionnement en air comprimé pour une composition de train constituée d'une pluralité de wagons de véhicule ferroviaire (1, 2, 3) accouplés les uns aux autres, dont plusieurs avec des consommateurs d'air comprimé (6), comportant au moins deux sources d'air comprimé (4, 5) et une conduite d'air comprimé (7) appropriée pour traverser la composition de train complète, dans lequel la conduite d'air comprimé (7) est pourvue de sections de conduite souples (8) pour la liaison des wagons de véhicule ferroviaire (1, 2, 3) et est reliée à ces sections de conduite souples (8) par l'intermédiaire de points d'accouplement (10),
dans lequel les au moins deux sources d'air comprimé (4, 5) alimentent la conduite d'air comprimé (7),
**caractérisé en ce que**, dans les conduites d'air comprimé (7) pourvues de consommateurs d'air comprimé (6) pour wagons de véhicule ferroviaire, du côté du wagon avant les points d'accouplement (10) de la conduite d'air comprimé (7) aux sections de conduite souples (8) reliant les wagons de véhicule ferroviaire (1, 2, 3), il est prévu respectivement une soupape de limitation de débit (11) se bloquant en direction du point d'accouplement (10) associé avec un étranglement (12) disposé respectivement en parallèle.

2. Agencement d'approvisionnement en air comprimé pour une composition de train selon la revendication 1,
**caractérisé en ce que** les au moins deux sources d'air comprimé (4, 5) sont prévues pour être disposées respectivement dans un wagon d'extrémité (1, 3) de la composition de train.

3. Agencement d'approvisionnement en air comprimé pour une composition de train selon la revendication 1 ou la revendication 2,
**caractérisé en ce que** l'une des sources d'air comprimé (4, 5) est allumée en continu pendant la conduite et l'autre source d'air comprimé est activée en cas de chute de la pression de l'air dans la conduite d'air comprimé (7) au-dessous d'une pression minimale déterminée.
